# EUROPEAN PATENT SPECIFICATION

(11) **EP 3 483 775 B1**
(45) Date of publication and mention of the grant of the patent: **13.10.2021**
(21) Application number: 18161485.0
(22) Date of filing: 13.03.2018
(51) Int. Cl.: G06K 7/10, H04B 5/00, G06F 3/147, G09G 5/14

(54) **DISPLAY MODULE AND DISPLAY DEVICE WITH NEAR FIELD COMMUNICATION MODULE**
ANZEIGEMODUL UND ANZEIGEVORRICHTUNG MIT NAHFELDKOMMUNIKATIONSMODUL
MODULE D'AFFICHAGE ET DISPOSITIF D'AFFICHAGE AVEC MODULE DE COMMUNICATION EN CHAMP PROCHE

(30) Priority: 10.11.2017 TW 106216782 U
(43) Date of publication of application: 15.05.2019
(73) Proprietor: Flytech Technology Co., Ltd., Taipei City 114 (TW)
(72) Inventor: FENG, TIEN-HSIEH, 114 Taipei City (TW)
(74) Representative: Zeitler Volpert Kandlbinder Patentanwälte Partnerschaft mbB

(56) References cited:
- EP-A1- 2 937 821
- KR-A- 20160 063 668
- KR-B1- 101 685 167
- Anonymous: "iPhone 6s Teardown - iFixit", , 24 September 2015 (2015-09-24), XP55510478, Retrieved from the Internet: URL:https://www.ifixit.com/Teardown/iPhone +6s+Teardown/48170 [retrieved on 2018-09-27]
- Square: "Taking Payments with Square Register", , 30 October 2017 (2017-10-30), page 1, XP054980540, Retrieved from the Internet: URL:https://www.youtube.com/watch?v=rVyqI4 8zruo [retrieved on 2020-06-09]

## Description

### FIELD OF THE INVENTION

The present invention relates to a display device of a cash register with a near field communication module.

### BACKGROUND OF THE INVENTION

The flourishing development of modern business activities has changed the payment methods of modern people. In addition to the traditional cash payment, the utilization rate of credit card payment is gradually increasing. For example, financial cards and credit cards are widely used.

Among the credit card payment methods, the mobile payment is the most prevalent. The mobile payment uses a near field communication (NFC) technology to provide a contactless payment method. Moreover, the mobile payment integrates with a number of different credit card distribution systems such as VISA cards, Master cards, American Express cards, and so on. In other words, the mobile payment is a payment method common to all over the world.

However, the existing cash registers still have some problems while the mobile payment is performed. For example, the existing cash register at least comprises a display device and a payment device, and the display device and the payment device are located at different positions. When the consumer completes the consumption and intends to pay, the consumer has to raise the head to view the payment information on the display device of the cash register and then lower the head to find the placement of the payment device. Subsequently, the consumer completes the payment according to the presentation image of the display device. In other words, the conventional payment method is not user-friendly.

For solving the drawbacks of the conventional technologies, there is a need of providing a novel and convenient display device that integrates the near field communication (NFC) technology. In a commercially available POS register according to the preamble of claim 1 (see for example URL:https://www.youtube.com/watch?v=rVyql148zruo), an NFC module is installed to conduct payment readily. However, since the NFC module is disposed at the lower or upper frame of the display device, a thick frame would be required. Such disposition of the NFC module at the frame would adversely affect the miniaturization of the display device, or only a very small size of the NFC module can be used.

### SUMMARY OF THE INVENTION

For solving the drawbacks of the conventional technologies, the present invention provides a display device of a cash register comprising the features of claim 1. Further embodiments are mentioned in the depending claims. The near field communication module generates a sensing wave when a sensitive object is located near the near field communication module.

In accordance with an aspect of the present invention, there is provided a display device of a cash register. The display device includes a display panel, a near field communication module and a main circuit board. The display panel includes a front part and a rear part. The main circuit board is installed on the rear part, and electrically connected with the display panel and the near field communication module. The near field communication module is installed on the rear part, or arranged between the rear part and the main circuit board. In response to a control signal received by the display panel from the main circuit board, a sensitive region mark is displayed on the front part at a specific position corresponding to a position of the near field communication module, so that the near field communication module is adapted to sense a sensitive object, which comes near the sensitive region mark, and generates a sensing wave corresponding to the sensitive object, thereby executing a payment operation with the sensitive object near the sensitive region mark.

In an embodiment, the near field communication module includes a near field communication antenna and a near field communication sensing circuit. The near field communication antenna is electrically connected with the near field communication sensing circuit. The near field communication sensing circuit is electrically connected with the main circuit board.

In an embodiment, the near field communication antenna is accommodated within a hollow region, and the near field communication sensing circuit is arranged between the rear part and the main circuit board or installed on the main circuit board.

In an embodiment, the display device further includes a covering member.

In an embodiment, the covering member includes a first case and a second case. The display panel and the main circuit board are arranged between the first case and the second case.

In an embodiment, the rear part is a metallic frame with a hollow region, and the near field communication module is accommodated within the hollow region.

In an embodiment, after the near field communication module senses the sensitive object near the near field communication antenna and generates the sensing wave, the near field communication sensing circuit issues an electric signal to the main circuit board.

In an embodiment, the near field communication antenna is installed on the first case or arranged between the first case and the front part of the display panel. The near field communication sensing circuit is arranged between the rear part of the display panel and the main circuit board or installed on main circuit board.

From the above description, the near field communication module is installed in the display module or the display device. When the display module or the display device senses a nearby sensitive object, a sensing wave is generated and the overall payment operation is completed. Since it is not necessary to additionally install the payment device or the sensing device, the display device of the present invention is cost-effective, user-friendly and easy-to-use.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a display device according to an embodiment of the present invention;
FIG. 2A is a schematic exploded view illustrating the display device of FIG. 1;
FIG. 2B is a schematic exploded view illustrating a display device according to another embodiment of the present invention;
FIG. 3 is a schematic exploded view illustrating the display device of FIG. 2A and taken along another viewpoint;
FIG. 4 schematically illustrates a sensitive region mark shown on the display device of FIG. 1; and
FIG. 5 is a schematic functional block diagram illustrating the signal exchange between a display module and a main board of the display device of FIG. 1.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. In the following embodiments and drawings, the elements irrelevant to the concepts of the present invention are omitted and not shown.

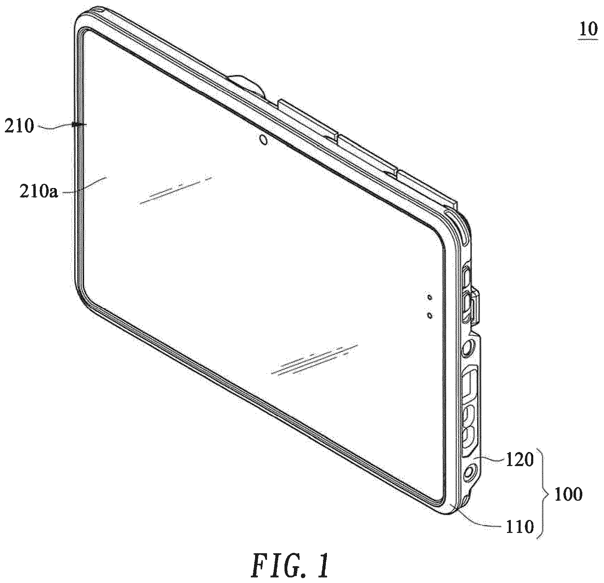

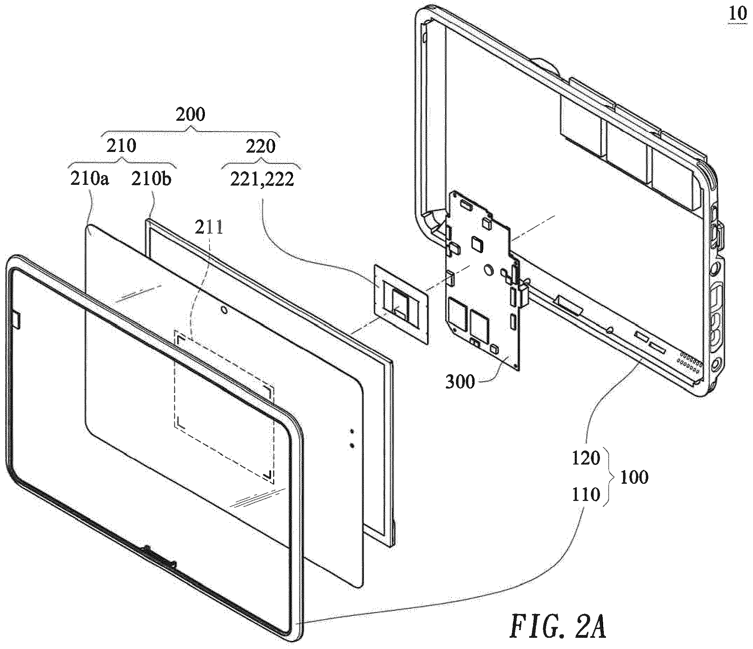

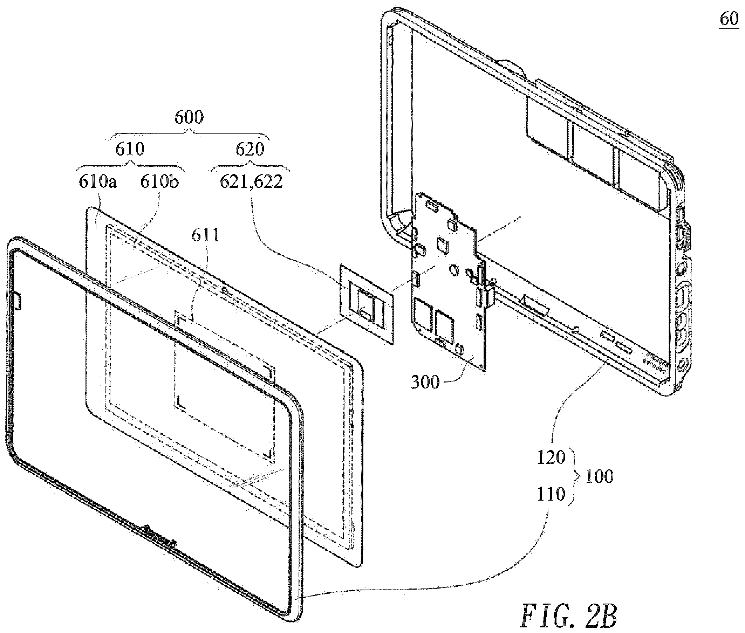

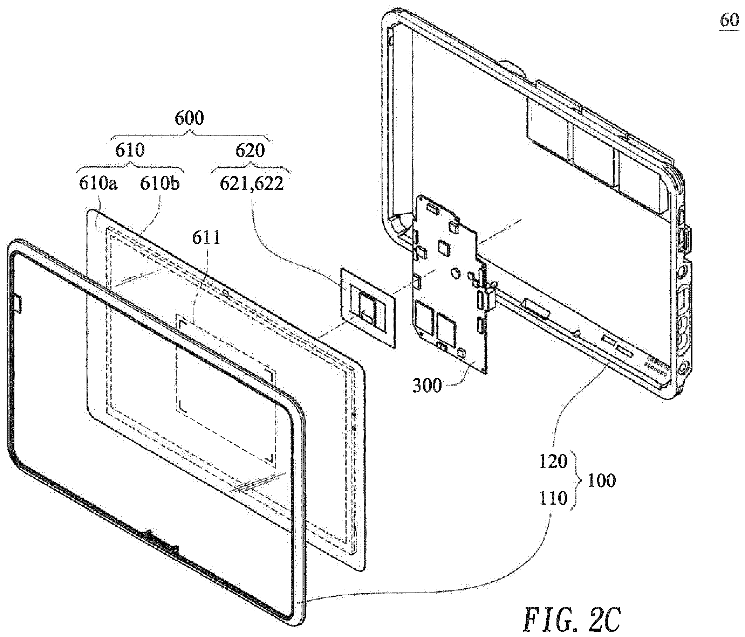

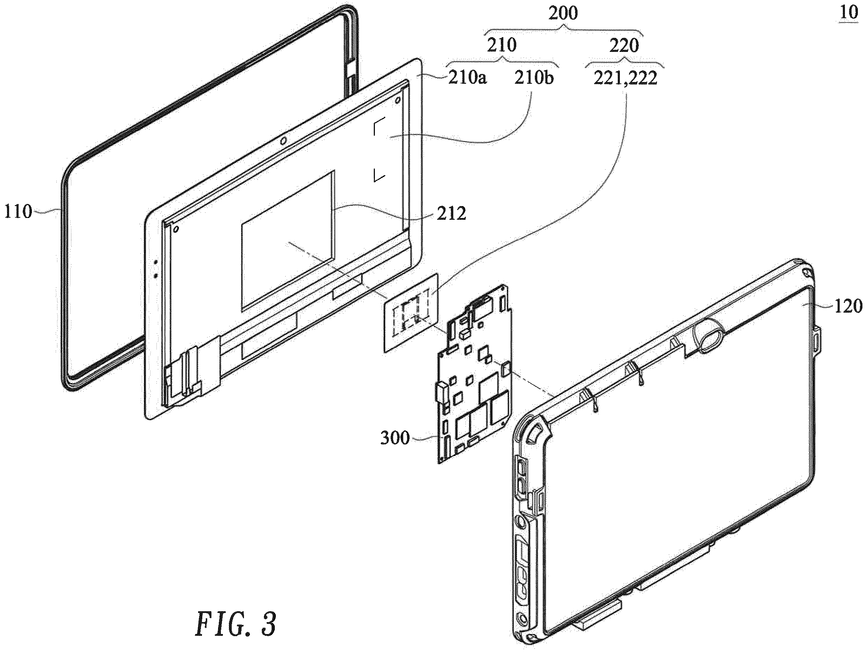

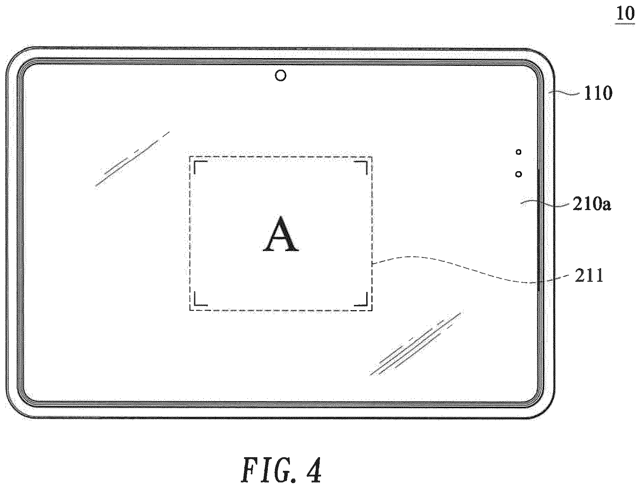

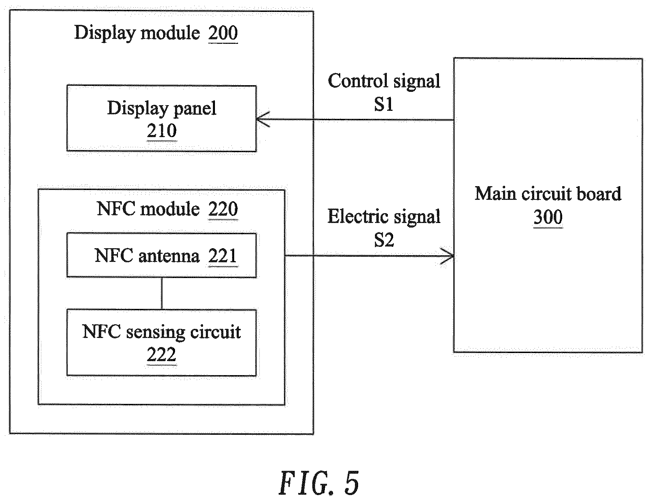

FIG. 1 is a schematic perspective view illustrating a display device according to an embodiment of the present invention. FIG. 2A is a schematic exploded view illustrating the display device of FIG. 1. FIG. 2B is a schematic exploded view illustrating a display device according to a further embodiment of the present invention. FIG. 3 is a schematic exploded view illustrating the display device of FIG. 2A and taken along another viewpoint. FIG. 4 schematically illustrates a sensitive region mark shown on the display device of FIG. 1. FIG. 5 is a schematic functional block diagram illustrating the signal exchange between a display module and a main board of the display device of FIG. 1.

Please refer to FIGS. 1, 2A and 3. In this embodiment, the display device 10 comprises a covering member 100, a display module 200 and a main circuit board 300. The covering member 100 comprises a first case 110 and a second case 120. The display module 200 comprises a display panel 210 and a near field communication module 220. The display panel 210 comprises a front part 210a and a rear part 210b. As shown in FIG. 4, a sensitive region mark 211 is shown on the front part 210a. The rear part 210b comprises a hollow region 212 for accommodating the near field communication module 220. As shown in FIG. 3, the near field communication module 220 comprises a near field communication antenna 221 and a near field communication sensing circuit 222.

The relationships between the above components will be described as follows. Please refer to FIGS. 2A, 3 and 5. The display module 200 and the main circuit board 300 are arranged between the first case 110 and the second case 120. The display panel 210 and the near field communication module 220 are electrically connected with the main circuit board 300. The near field communication antenna 221 is electrically connected with the near field communication sensing circuit 222. As shown in FIG. 5, the display panel 210 receives a control signal S1, and the near field communication module 220 issues an electric signal S2. According to the presentation image shown on the front part 210a of the display panel 210, the consumer can complete the payment operation.

In this embodiment, the near field communication module 220 is arranged between the rear part 210b of the display panel 210 and the main circuit board 300. When the near field communication module 220 senses a sensitive object near the front part 210a of the display panel 210, the near field communication module 220 generates a sensing wave.

In an embodiment, the rear part 210b of the display panel 210 is a metallic frame. For facilitating the near field communication module 220 to sense the sensitive object, the near field communication module 220 has to be disposed within the hollow region 212. It is noted that the applications of the near field communication module 220 are not restricted.

In FIG. 2B, a display device 60 according to a further embodiment of the present invention is shown. The display module 600 comprises a display panel 610 and a near field communication module 620. The display panel 610 comprises a front part 610a and a rear part 610b. In comparison with the above embodiments, the rear part 610b of the display panel 610 is not a metallic frame. Consequently, the rear part 610b is not equipped with the hollow region 212 as shown in FIG. 3. That is, the near field communication module 620 is directly installed on the rear part 610b, or the near field communication module 620 is arranged between the rear part 610b and the main circuit board 300.

As mentioned above, the installation position of the near field communication antenna of the near field communication module may be adjusted according to the structure of the covering member or the structure of the display panel. For example, the near field communication antenna is installed on first case, or arranged between the first case and the front part of the display panel, or arranged between the rear part of the display panel and the main circuit board. Consequently, the near field communication antenna can sense the sensitive object near the sensitive region mark. In accordance with a feature of the present invention, the near field communication module is installed in the display device. Consequently, the display device is capable of sensing the sensitive object near the sensitive region mark and completing the overall payment operation. Since it is not necessary to additionally install the payment device or the sensing device, the display device of the present invention is cost-effective, user-friendly and easy-to-use.

Hereinafter, the relationship between the display module and the main circuit board will be illustrated in more details with reference to FIG. 2A. Please refer to FIGS. 2A, 3 and 5 again. When the consumer completes the consumption and intends to pay, the main circuit board 300 issues the control signal S1 to the display panel 210. According to the control signal S1, the sensitive region mark 211 is shown on the front part 210a of the display panel 210 at the position corresponding to the near field communication antenna 221. For example, as shown in FIG. 4, the sensitive region mark 211 corresponds to the position of the letter A. In practice, a payment area or a pattern or symbol corresponding to the payment operation is displayed on the sensitive region mark 211 to guide the user to place the sensitive object to the nearby position of the sensitive region mark 211 and complete the payment operation. The sensitive object is a financial card, a credit card, a stored value card and any other appropriate electronic device with a mobile payment function.

According to the message shown on the front part 210a of the display panel 210, the consumer may place the payment object (e.g., a credit card, a smart phone, a smart bracelet or a travel card) to the position near the sensitive region mark 211 of the front part 210a. Consequently, the near field communication module 220 senses the sensitive object through the near field communication antenna 221 and generates the corresponding sensing wave. Meanwhile, the near field communication sensing circuit 222 issues the electric signal S2 to the main circuit board 300. Consequently, the overall payment operation is completed.

## Claims

1. A display device (10, 60) of a cash register, comprising:
a display panel (210, 610) comprising a front part (210a, 610a) and a rear part (210b, 610b); and
a main circuit board (300) installed on the rear part (210b, 610b), and electrically connected with the display panel (210, 610), and
**characterized in** further comprising a near field communication module (220, 620) electrically connected with the main circuit board (300), and installed on the rear part (210b, 610b), or arranged between the rear part (210b, 610b) and the main circuit board (300),
wherein in response to a control signal (S1) received by the display panel (210, 610) from the main circuit board (300), a sensitive region mark (211, 611) is displayable on the front part (210a, 610a) at a specific position corresponding to a position of the near field communication module (220, 620), so that the near field communication module (220, 620) adapted to sense a sensitive object, which comes near the sensitive region mark (211, 611), and to generate a sensing wave corresponding to the sensitive object, is capable of executing a payment operation with the sensitive object near the sensitive region mark (211, 611).

2. The display device (10, 60) according to claim 1, wherein the near field communication module (220, 620) comprises a near field communication antenna (221, 621) and a near field communication sensing circuit (222, 622), wherein the near field communication antenna (221, 621) is electrically connected with the near field communication sensing circuit (222, 622), and the near field communication sensing circuit (222, 622) is electrically connected with the main circuit board (300).

3. The display device (10, 60) according to claim 2, wherein the near field communication antenna (221, 621) is accommodated within a hollow region (212) of the rear part (210b, 610b), and the near field communication sensing circuit (222, 622) is arranged between the rear part (210b, 610b) and the main circuit board (300) or installed on the main circuit board (300).

4. The display device (10, 60) according to claim 2, further comprising a covering member (100).

5. The display device (10, 60) according to claim 4, wherein
the covering member (100) comprises a first case (110) and a second case (120), wherein the display panel (210, 610) and the main circuit board (300) are arranged between the first case (110) and the second case (120).

6. The display device (10, 60) according to claim 1, wherein the rear part (210b) is a metallic frame having a hollow region (212), and the near field communication module (220) is accommodated within the hollow region (212).

7. The display device (10, 60) according to claim 1, wherein after the near field communication module (220) senses the sensitive object near the near field communication antenna (221) and generates the sensing wave, the near field communication sensing circuit (222) issues an electric signal (S2) to the main circuit board (300).

## Patentansprüche

1. Anzeigevorrichtung (10, 60) einer Registrierkasse, folgendes aufweisend:
einen Bildschirm (210, 610) mit einem vorderen Teil (210a, 610a) und einem hinteren Teil (210b, 610b); und
eine Hauptplatine (300), die auf dem hinteren Teil (210b, 610b) angeordnet und elektrisch mit dem Bildschirm (210, 610) verbunden ist, und
**dadurch gekennzeichnet, dass** diese ferner ein Nahfeld-Kommunikationsmodul (220, 620) aufweist, das elektrisch mit der Hauptplatine (300) verbunden und auf dem hinteren Teil (210b, 610b) oder zwischen dem hinteren Teil (210b, 610b) und der Hauptplatine (300) angeordnet ist,
wobei als Reaktion auf ein Steuersignal (S1), das der Bildschirm (210, 610) von der Hauptplatine (300) empfängt, eine Empfindlichkeitsbereichsmarkierung (211, 611) auf dem vorderen Teil (210a, 610a) an einer bestimmten Position anzeigbar ist, die einer Position des Nahfeld-Kommunikationsmoduls (220, 620) entspricht, so dass das Nahfeld-Kommunikationsmodul (220, 620) derart ausgebildet ist, dass es ein sensitives Objekt erfasst, das in die Nähe der Empfindlichkeitsbereichsmarkierung (211, 611) kommt, und dass es entsprechend dem sensitiven Objekt ein Detektionssignal erzeugt, so dass das Nahfeld-Kommunikationsmodul (220, 620) in der Lage ist, einen Zahlungsvorgang mit dem sensitiven Objekt in der Nähe der Empfindlichkeitsbereichsmarkierung (211, 611) auszuführen.

2. Anzeigevorrichtung (10, 60) nach Anspruch 1, wobei das Nahfeld-Kommunikationsmodul (220, 620) eine Nahfeld-Kommunikationsantenne (221, 621) und eine Nahfeld-Kommunikationserfassungsschaltung (222, 622) aufweist, wobei die Nahfeld-Kommunikationsantenne (221, 621) elektrisch mit der Nahfeld-Kommunikationserfassungsschaltung (222, 622) verbunden ist, und die Nahfeld-Kommunikationserfassungsschaltung (222, 622) elektrisch mit der Hauptplatine (300) verbunden ist.

3. Anzeigevorrichtung (10, 60) nach Anspruch 2, wobei die Nahfeld-Kommunikationsantenne (221, 621) in einem hohlen Bereich (212) des hinteren Teils (210b, 610b) und die Nahfeld-Kommunikationserfassungsschaltung (222, 622) zwischen dem hinteren Teil (210b, 610b) und der Hauptplatine (300) oder auf der Hauptplatine (300) angeordnet ist.

4. Die Anzeigevorrichtung (10, 60) nach Anspruch 2, wobei diese weiterhin ein Abdeckelement (100) aufweist.

5. Anzeigevorrichtung (10, 60) nach Anspruch 4, wobei das Abdeckelement (100) ein erstes Gehäuse (110) und ein zweites Gehäuse (120) aufweist, wobei der Bildschirm (210, 610) und die Hauptplatine (300) zwischen dem ersten Gehäuse (110) und dem zweiten Gehäuse (120) angeordnet sind.

6. Anzeigevorrichtung (10, 60) nach Anspruch 1, wobei der hintere Teil (210b) ein metallischer Rahmen mit einem hohlen Bereich (212) und das Nahfeld-Kommunikationsmodul (220) innerhalb des hohlen Bereichs (212) angeordnet ist.

7. Anzeigevorrichtung (10,60) nach Anspruch 1, wobei die Nahfeld-Kommunikationserfassungsschaltung (222) ein elektrisches Signal (S2) an die Hauptplatine (300) ausgibt, nachdem das Nahfeld-Kommunikationsmodul (220) das empfindliche Objekt in der Nähe der Nahfeld-Kommunikationsantenne (221) erfasst und das Detektionssignal erzeugt hat.

## Revendications

1. Dispositif d'affichage (10, 60) d'une caisse enregistreuse, comprenant :
un panneau d'affichage (210, 610) comprenant une partie avant (210a, 610a) et une partie arrière (210b, 610b) ; et
une carte de circuit principal (300) installée sur la partie arrière (210b, 610b) et connectée électriquement au panneau d'affichage (210, 610), et
**caractérisé en ce qu'**il comprend en outre un module de communication en champ proche (220, 620) connecté électriquement à la carte de circuit principal (300) et installé sur la partie arrière (210b, 610b) ou disposé entre la partie arrière (210b, 610b) et la carte de circuit principal (300),
dans lequel, en réponse à un signal de commande (S1) reçu par le panneau d'affichage (210, 610) en provenance de la carte de circuit principal (300), une marque de région sensible (211, 611) peut être affichée sur la partie avant (210a, 610a) à une position spécifique correspondant à une position du module de communication en champ proche (220, 620), de sorte que le module de communication en champ proche (220, 620), adapté à détecter un objet sensible qui s'approche de la marque de région sensible (211, 611) et à générer une onde de détection correspondant à l'objet sensible, est capable d'exécuter une opération de paiement avec l'objet sensible proche de la marque de région sensible (211, 611).

2. Dispositif d'affichage (10, 60) selon la revendication 1, dans lequel le module de communication en champ proche (220, 620) comprend une antenne de communication en champ proche (221, 621) et un circuit de détection de communication en champ proche (222, 622), dans lequel l'antenne de communication en champ proche (221, 621) est connectée électriquement au circuit de détection de communication en champ proche (222, 622) et le circuit de détection de communication en champ proche (222, 622) est connecté électriquement à la carte de circuit principal (300).

3. Dispositif d'affichage (10, 60) selon la revendication 2, dans lequel l'antenne de communication en champ proche (221, 621) est logée à l'intérieur d'une région creuse (212) de la partie arrière (210b, 610b) et le circuit de détection de communication en champ proche (222, 622) est disposé entre la partie arrière (210b, 610b) et la carte de circuit principal (300) ou installé sur la carte de circuit principal (300).

4. Dispositif d'affichage (10, 60) selon la revendication 2, comprenant en outre un élément de recouvrement (100).

5. Dispositif d'affichage (10, 60) selon la revendication 4, dans lequel l'élément de recouvrement (100) comprend un premier boîtier (110) et un second boîtier (120), dans lequel le panneau d'affichage (210, 610) et la carte de circuit principal (300) sont disposés entre le premier boîtier (110) et le second boîtier (120).

6. Dispositif d'affichage (10, 60) selon la revendication 1, dans lequel la partie arrière (210b) est un cadre métallique présentant une région creuse (212) et le module de communication en champ proche (220) est logé à l'intérieur de la région creuse (212).

7. Dispositif d'affichage (10, 60) selon la revendication 1, dans lequel, après que le module de communication en champ proche (220) a détecté l'objet sensible à proximité de l'antenne de communication en champ proche (221) et généré l'onde de détection, le circuit de détection de communication en champ proche (222) émet un signal électrique (S2) vers la carte de circuit principal (300).
